# EUROPEAN PATENT APPLICATION

(11) **EP 4 292 836 A1**
(43) Date of publication of application: **20.12.2023**
(21) Application number: 21937034.3
(22) Date of filing: 26.11.2021
(51) Int. Cl.: B60C 19/00

(54) **TIRE MANAGING DEVICE AND TIRE MANAGING METHOD**

(30) Priority: 13.04.2021 JP 2021067667
(71) Applicant: BRIDGESTONE CORPORATION, Chuo-ku Tokyo 104-8340 (JP)
(72) Inventor: KATSUNO Hiroyuki, Tokyo 104-8340 (JP)
(74) Representative: Marks & Clerk LLP
(86) International application number: PCT/JP2021/043493
(87) International publication number: WO 2022/219841

(57) **Abstract**

A tire management apparatus (10) configured to manage a tire mounted on a vehicle, comprises: a data acquisition section (131) configured to acquire data related to a running distance of the vehicle and a wear amount of the tire in a first period; a wear state calculator (132) configured to calculate a wear state value that is a wear rate of the tire or a runnable distance until an end of a wear life of the tire, based on the acquired data; and an evaluation value calculator (133) configured to calculate an evaluation value for the tire, based on comparison between the calculated wear state value and a reference value of the wear state value.

## Description

### TECHNICAL FIELD

The present disclosure relates to a tire management apparatus and a tire management method.

### BACKGROUND

Systems are conventionally known that acquire and evaluate data of a running vehicle in order to make suggestions for improvement in driving. For example, JP 2013-040575 A (PTL 1) discloses a technique in which, in order to evaluate whether driving is suitable for fuel-saving driving, a parameter that changes according to the value obtained by subtracting the kinetic energy increase rate of the vehicle due to gravity from the kinetic energy change rate of the vehicle is detected to make the evaluation.

### CITATION LIST

### Patent Literature

PTL 1: JP 2013-040575 A

### SUMMARY

### (Technical Problem)

The wear amount of the tires mounted on the vehicle may be affected depending on the driving. For example, driving involving roaring start, heavy braking, etc. can reduce the tire wear life. Evaluation by the conventional systems does not take tire wear and the like into consideration.

It could therefore be helpful to provide a tire management apparatus and a tire management method capable of appropriately managing the state of tires mounted on a vehicle.

### (Solution to Problem)

A tire management apparatus according to an embodiment of the present disclosure is a tire management apparatus configured to manage a tire mounted on a vehicle, comprising: a data acquisition section configured to acquire data related to a running distance of the vehicle and a wear amount of the tire in a first period; a wear state calculator configured to calculate a wear state value that is a wear rate of the tire or a runnable distance until an end of a wear life of the tire, based on the acquired data; and an evaluation value calculator configured to calculate an evaluation value for the tire, based on comparison between the calculated wear state value and a reference value of the wear state value.

### (Advantageous Effect)

It is thus possible to provide a tire management apparatus and a tire management method capable of appropriately managing the state of tires mounted on a vehicle.

### BRIEF DESCRIPTION OF THE DRAWINGS

In the accompanying drawings:
FIG. 1 is a diagram illustrating an example of the structure of a tire management apparatus according to an embodiment of the present disclosure;
FIG. 2 is a diagram illustrating an example of the structure of a tire management system including the tire management apparatus in FIG. 1;
FIG. 3 is a diagram for explaining the runnable distance until the end of wear life;
FIG. 4 is a diagram for explaining the runnable distance until the end of wear life;
FIG. 5 is a diagram illustrating a display example of evaluation values and the like; and
FIG. 6 is a flowchart illustrating an example of a tire management method according to an embodiment of the present disclosure.

### DETAILED DESCRIPTION

A tire management apparatus and a tire management method according to an embodiment of the present disclosure will be described below with reference to the drawings. In the drawings, the same or corresponding parts are given the same reference signs. In the description of this embodiment, the description of the same or corresponding parts is omitted or simplified as appropriate.

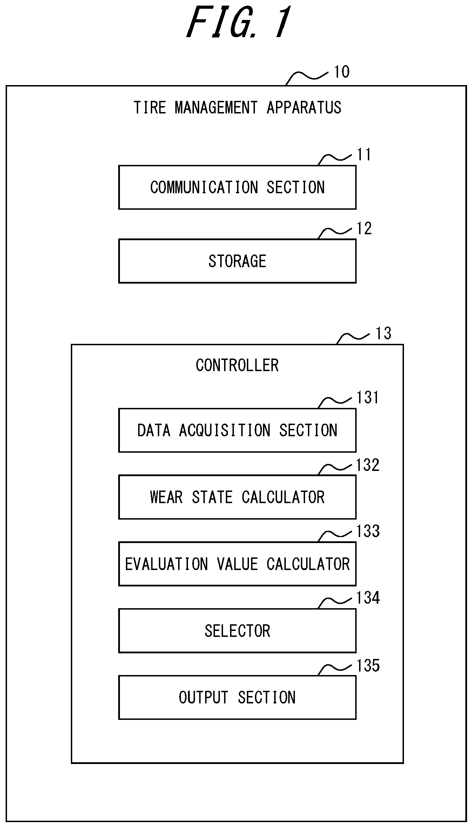

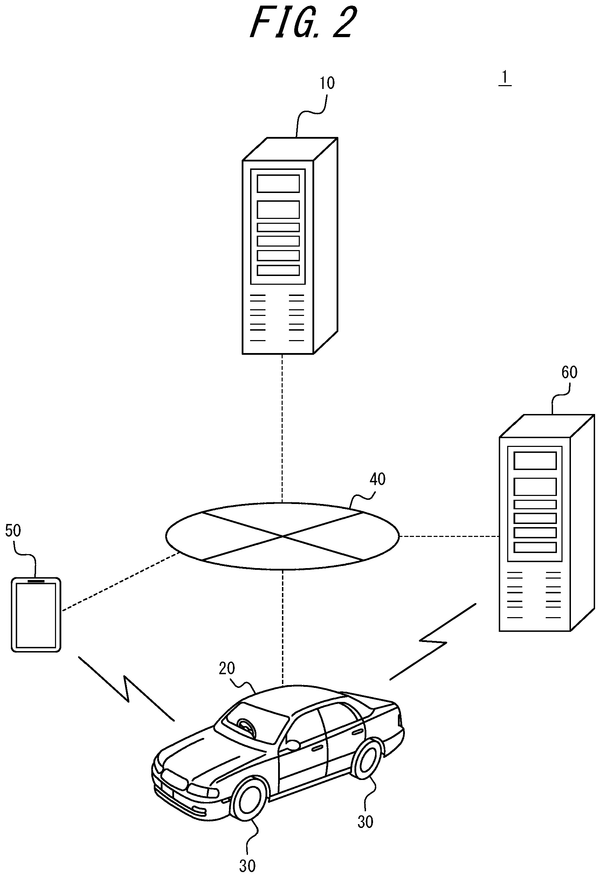

FIG. 1 illustrates an example of the structure of a tire management apparatus 10 according to this embodiment. FIG. 2 illustrates an example of the structure of a tire management system 1 including the tire management apparatus 10 in FIG. 1. The tire management apparatus 10 is an apparatus that manages tires 30 mounted on a vehicle 20. The tire management apparatus 10 can calculate the below-described evaluation value and present it to the user, as management of the state of each tire 30. The user is the user of the tire management apparatus 10 or tire management system 1. In particular, the user includes the driver of the vehicle 20.

The tire management apparatus 10 includes a communication section 11, a storage 12, and a controller 13. The controller 13 includes a data acquisition section 131, a wear state calculator 132, an evaluation value calculator 133, a selector 134, and an output section 135. The tire management apparatus 10 may be, for example, a computer such as a server, as a hardware structure. The components of the tire management apparatus 10 will be described in detail later.

The tire management apparatus 10 may constitute the tire management system 1 together with at least one of a terminal apparatus 50 and a server 60 to which the tire management apparatus 10 is connected via a network 40. The network 40 is the Internet as an example, but may be a local area network (LAN) .

The terminal apparatus 50 is, for example, a general-purpose mobile terminal such as a smartphone or a tablet terminal, without being limited thereto. The terminal apparatus 50 is possessed by a user. The terminal apparatus 50 may acquire data such as the running distance of the vehicle 20 and transmit the data to the tire management apparatus 10 via the network 40. The terminal apparatus 50 may also function as a display device that acquires an evaluation value and the like from the tire management apparatus 10 via the network 40 and displays them to the user. In the case where a device having a communication function is mounted on the vehicle 20, the terminal apparatus 50 may acquire data such as the running distance by wirelessly communicating with the device.

The server 60 is, for example, a computer different from the tire management apparatus 10. For example, the server 60 may be installed at an inspection facility for the vehicle 20. The server 60 may acquire data such as the running distance of the vehicle 20 and transmit the data to the tire management apparatus 10 via the network 40. The server 60 may also acquire an evaluation value and the like from the tire management apparatus 10 via the network 40 and display them on a display device such as a display connected to the server 60. In the case where a device having a communication function is mounted on the vehicle 20, the server 60 may acquire data such as the running distance by wirelessly communicating with the device.

The device mounted on the vehicle 20 may be directly connectable to the network 40 and transmit data such as the running distance to the tire management apparatus 10.

The components of the tire management apparatus 10 will be described in detail below. The communication section 11 includes one or more communication modules connected to the network 40. The communication section 11 may include, for example, a communication module compatible with a mobile communication standard such as 4G (4th Generation) or 5G (5th Generation). The communication section 11 may include, for example, a communication module compatible with a wired LAN standard (e.g. 1000BASE-T). The communication section 11 may include, for example, a communication module compatible with a wireless LAN standard (e.g. IEEE 802.11).

The storage 12 is at least one memory. Examples of the memory include semiconductor memory, magnetic memory, and optical memory, but the memory is not limited to such and may be any memory. The storage 12 functions, for example, as a primary storage device or a secondary storage device. The storage 12 is included in the tire management apparatus 10, for example. Alternatively, the storage 12 may be an external storage accessed by the tire management apparatus 10 via any interface.

The storage 12 stores various data used in various calculations executed by the controller 13. The storage 12 may also store results and intermediate data of various calculations executed by the controller 13.

The controller 13 is at least one processor. Examples of the processor include a general-purpose processor and a dedicated processor specialized for specific processing, but the processor is not limited to such and may be any processor. The controller 13 controls the overall operation of the tire management apparatus 10.

The tire management apparatus 10 may have the following software structure. At least one program used for controlling the operation of the tire management apparatus 10 is stored in the storage 12. When the program stored in the storage 12 is read by the processor in the controller 13, the program causes the controller 13 to function as the data acquisition section 131, the wear state calculator 132, the evaluation value calculator 133, the selector 134, and the output section 135.

The data acquisition section 131 acquires data related to the running distance of the vehicle 20 and the wear amount of the tire 30. For example, the data related to the running distance of the vehicle 20 and the wear amount of the tire 30 may be acquired from an electronic control unit (ECU) in the vehicle 20 via an in-vehicle network such as Controller Area Network (CAN) or via a device having a communication function mounted on the vehicle 20 and the network 40. An example of the data related to the wear amount of the tire 30 is data related to the remaining groove depths of the grooves on the tread surface, which is data directly indicating the wear amount of the tire 30. The data acquisition section 131 may acquire data from which the wear amount of the tire 30 can be calculated, instead of the direct data of the wear amount of the tire 30. An example of the data from which the wear amount of the tire 30 can be calculated is data of running history involving the accelerator, brake, etc. The data acquisition section 131 may calculate the wear amount using a relational expression (mathematical model) of the accelerator, brake, and wear amount based on past historical data of the tire 30. That is, the data acquisition section 131 may predict the wear amount of the tire 30. The past historical data of the tire 30 may be stored in the storage 12 and read from the storage 12 by the data acquisition section 131.

The data such as the running distance acquired by the data acquisition section 131 may be data for a certain period. The period is not limited, and may be not fixed (i.e. may vary). In this embodiment, the data acquisition section 131 acquires data related to the running distance of the vehicle 20 and the wear amount of the tire 30 in one month. Suppose a first period is a certain data acquisition period and a second period is a data acquisition period after the first period. In this embodiment, the tire management apparatus 10 acquires data of the first period (one month) and calculates an evaluation value based on the data. After this, the tire management apparatus 10 acquires new data of the second period (one month) and calculates an evaluation value based on the new data. Thus, in this embodiment, the tire management apparatus 10 repeatedly acquires data every month and calculates an evaluation value based on the acquired data of one month.

The data acquired by the data acquisition section 131 is stored in the storage 12 in association with the vehicle 20 or the driver of the vehicle 20.

The wear state calculator 132 calculates a wear state value based on the data acquired by the data acquisition section 131. The wear state value is a prediction value of the state of the tire 30, and is the runnable distance until the end of the wear life of the tire 30. The runnable distance until the end of the wear life of the tire 30 can also be calculated from the wear rate of the tire 30. Therefore, the wear state value may be the wear rate of the tire 30 instead of the runnable distance until the end of the wear life of the tire 30. That is, the wear state value is the wear rate of the tire 30 or the runnable distance until the end of the wear life of the tire 30.

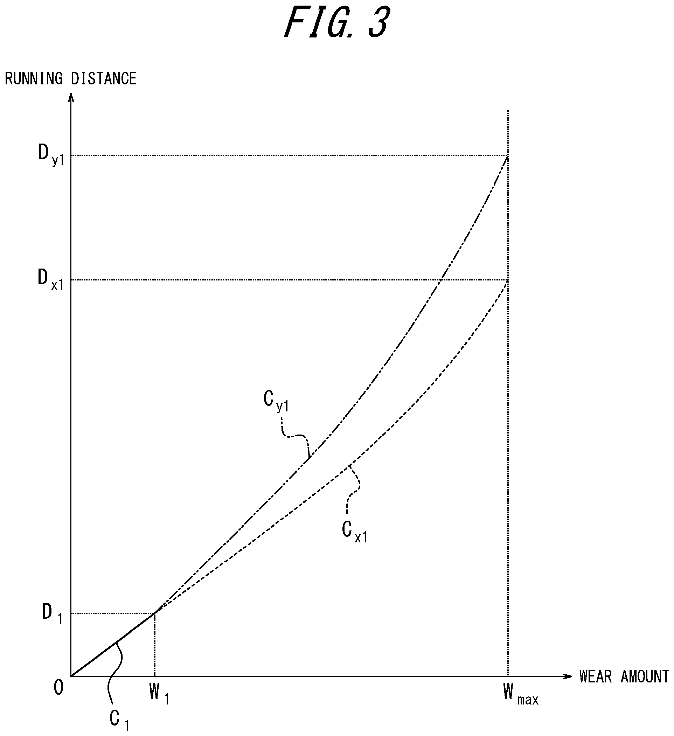

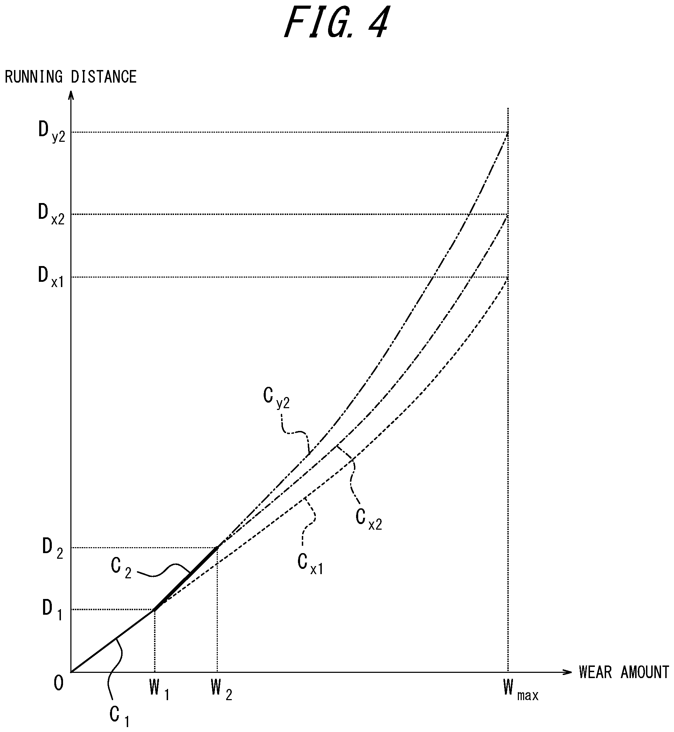

The wear state calculator 132 can calculate (predict) the runnable distance until the end of the wear life in the following manner. FIG. 3 illustrates the runnable distance until the end of the wear life calculated by the wear state calculator 132 in the case where the data acquisition section 131 acquires data of the first period. FIG. 4 illustrates the runnable distance until the end of the wear life calculated by the wear state calculator 132 in the case where the data acquisition section 131 acquires data of the second period. The horizontal axis in each of FIGS. 3 and 4 indicates the wear amount of the tire 30. The wear amount of the tire 30 is represented by the difference between the initial remaining groove depth (for example, 8.0 mm) and the current remaining groove depth. The maximum wear amount (Wₘₐₓ) of the tire 30 is determined by the difference between the initial remaining groove depth and the remaining groove depth at the end of the wear life (for example, 1.6 mm). The vertical axis in each of FIGS. 3 and 4 indicates the running distance of the vehicle 20. The running distance corresponding to the maximum wear amount (Wₘₐₓ) of the tire 30 is the runnable distance until the end of the wear life.

In the first period, the wear amount of the tire 30 is W₁ and the running distance of the vehicle 20 is D₁, as indicated by C₁ in FIG. 3. The wear state calculator 132 calculates (predicts) Dₓ₁ which is the runnable distance until the end of the wear life, using a prediction curve Cₓ₁ based on the data of the first period. The prediction curve Cₓ₁ may be obtained, for example, by inputting the values of the data of the first period to a mathematical model based on past historical data. For example, a machine learning model may be used instead of the mathematical model.

In the second period, the wear amount of the tire 30 is W₂ - W₁ and the running distance of the vehicle 20 is D₂ - D₁, as indicated by C₂ in FIG. 4. The wear state calculator 132 calculates (predicts) Dₓ₂, which is the runnable distance until the end of the wear life, using a prediction curve Cₓ₂ based on the data of the second period. The running distance of the vehicle 20 in the second period is substantially the same as that in the first period. Meanwhile, the wear amount of the tire 30 in the second period is less than that in the first period. Hence, the predicted runnable distance until the end of the wear life is Dₓ₂ that is longer than Dₓ₁.

The wear state value calculated by the wear state calculator 132 is stored in the storage 12 in association with the vehicle 20 or the driver of the vehicle 20.

The evaluation value calculator 133 calculates an evaluation value for the tire 30, based on comparison between the wear state value calculated by the wear state calculator 132 (the runnable distance until the end of the wear life in the example of FIGS. 3 and 4) and a reference value of the wear state value. The evaluation value quantifies the evaluation performed based on the relative difference of the wear state value from the reference value. The evaluation value may include the wear state value itself.

In the example in FIG. 3, the evaluation value calculator 133 may set the reference value based on data related to the running distance of the vehicle 20 and the wear amount of the tire 30 in a period before the first period. That is, the evaluation value calculator 133 may set the reference value using past data of the vehicle 20 stored in the storage 12. Instead of past data associated with the vehicle 20, past data associated with the driver of the vehicle 20 may be used to set the reference value. Comparison with past driving data as the reference value allows the user to objectively know the degree of improvement in driving.

In the example in FIG. 4, the evaluation value calculator 133 may set (update) the reference value based on data related to the running distance of the vehicle 20 and the wear amount of the tire 30 in the first period. That is, the evaluation value calculator 133 may update the reference value in the case of calculating the evaluation value based on new data. In the example in FIG. 4, the evaluation value calculator 133 evaluates the prediction curve Cₓ₂ and the runnable distance Dₓ₂ in the second period using the prediction curve Cₓ₁ and the runnable distance Dₓ₁ in the first period as the reference value. Calculating the evaluation value through comparison between the driving in the previous period (first period) and the driving in the current period (second period) allows the user to know the change (improvement) in driving from the previous time, with it being possible to further enhance the user's willingness to improve driving. Particularly in the case where the tire management apparatus 10 repeatedly calculates the evaluation value based on data for one month as in this embodiment, updating the reference value based on the driving in the previous period is useful in maintaining the user's willingness to improve driving.

In the example in FIG. 3, the evaluation value calculator 133 may set an ideal value (C_{y1}) set according to the prediction curve Cₓ₁ and a runnable distance D_{y1}, as the reference value. The ideal value may be a target index that is achievable from the current wear state of the tire 30. The ideal value may be set by simulation or set based on the best performance of other drivers in the past. In the example in FIG. 4, the evaluation value calculator 133 may set (update) an ideal value (C_{y2}) set according to the prediction curve Cₓ₂ and a runnable distance D_{y2}, as the reference value. Calculating the evaluation value through comparison with the ideal value in this way allows the user to clearly know the target.

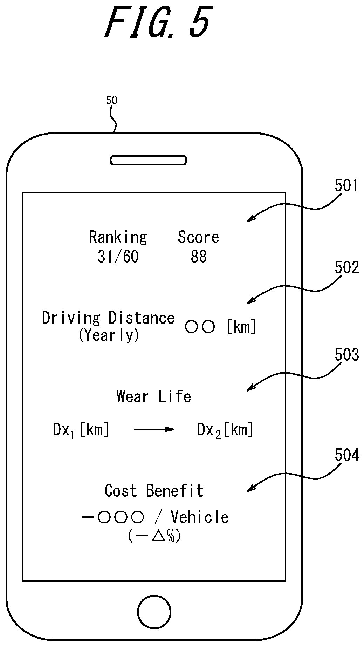

The evaluation value calculator 133 may calculate a score and a ranking as the evaluation value using the foregoing reference value (see reference sign "501" in FIG. 5). The score may be calculated by adding or subtracting points depending on the difference with a reference value of 100, for example. The ranking may indicate the order of the score among a plurality of vehicles 20 that run with the same or similar tires 30. Calculating such an evaluation value can improve the user's willingness to improve driving.

The evaluation value calculator 133 may calculate a value related to the cost of the tire 30 as the evaluation value (see reference sign "504" in FIG. 5). The cost may be the acquisition cost or maintenance cost of the tire 30. The cost-related value is calculated, for example, based on the price of one set of tires 30, the annual running (driving) distance of the vehicle 20 (see reference sign "502" in FIG. 5), and the change in the runnable distance until the end of the wear life of the tire 30 (see reference sign "503" in FIG. 5). In this calculation example, the effect of driving improvement is indicated as the cost saved in one year. Including the cost-related value in the evaluation value allows the user to know the evaluation of the state of the tire 30 more clearly.

The evaluation value calculator 133 may calculate the evaluation value using the average of the plurality of tires 30 mounted on the vehicle 20. The plurality of tires 30 may wear unevenly, for example, the wear amount may be greater in the drive wheels. By calculating the evaluation value using the average of the plurality of tires 30, it is possible to convey such evaluation that takes all of the plurality of tires into account to the user.

The evaluation value calculated by the evaluation value calculator 133 is stored in the storage 12 in association with the vehicle 20 or the driver of the vehicle 20.

The selector 134 selects one or more tires from a plurality of tires that differ in wear characteristics as a suggestion for replacement tires to the user, based on the evaluation value calculated by the evaluation value calculator 133. In this embodiment, the selector 134 selects one or more tires in the case where the wear amount of the tire 30 approaches the maximum value (see Wₘₐₓ in FIGS. 3 and 4) and it is about time to change tires. A list of a plurality of tires that differ in wear characteristics is stored in the storage 12, and read by the selector 134. For example, the selector 134 may select a tire having wear resistance in the case where the score in the evaluation value is poor. The selector 134 can suggest the user to change to appropriate tires according to the driving characteristics.

The output section 135 outputs the evaluation value calculated by the evaluation value calculator 133, data of the tires selected by the selector 134, and related data stored in the storage 12 to a display device or the like. For example, the display of the terminal apparatus 50 or the server 60 can function as a display device that displays evaluation results to the user, as mentioned above. FIG. 5 illustrates a display example of evaluation values and the like on the terminal apparatus 50. For example, evaluation values such as the score and ranking (see reference sign "501" in FIG. 5), the runnable distance until the end of the wear life (see reference sign "503" in FIG. 5), and the cost-related value (see reference sign "504" in FIG. 5) and data of the annual running distance of the vehicle 20 (see reference sign "502" in FIG. 5) are displayed on the screen of the terminal apparatus 50. Data of one or more tires selected by the selector 134 may be displayed in the case where it is about time to change the tire 30. For example, in the case where the score is poor, a driving improvement advice such as "Avoid roaring start" may be displayed. The driving improvement advice may be, for example, stored in the storage 12 and selected by the output section 135.

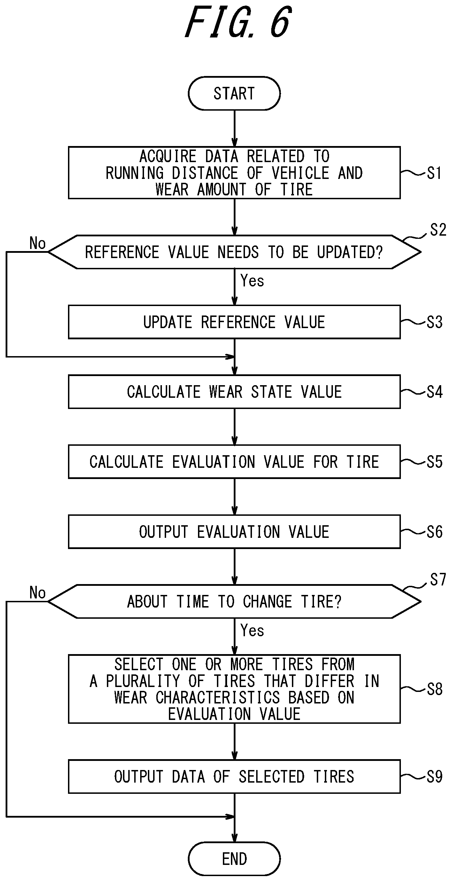

FIG. 6 is a flowchart illustrating an example of a tire management method executed by the tire management apparatus 10 according to this embodiment.

The tire management apparatus 10 acquires data related to the running distance of the vehicle 20 and the wear amount of the tire 30 (step S1).

In the case where the reference value needs to be updated (step S2: Yes), the tire management apparatus 10 updates the reference value (step S3). In the case where the reference value does not need to be updated (step S2: No), the tire management apparatus 10 proceeds to step S4. For example, when data such as the running distance of the vehicle 20 in a period before the first period is set to the reference value in advance, the tire management apparatus 10 may determine that the reference value does not need to be updated in the case where data in the first period is acquired as illustrated in FIG. 3. The tire management apparatus 10 may determine that the reference value needs to be updated in the case where data in the second period (data in a new period) is acquired as illustrated in FIG. 4.

The tire management apparatus 10 calculates a wear state value (step S4), calculates an evaluation value for the tire 30 through comparison with the reference value (step S5), and outputs the calculated evaluation value (step S6).

In the case where it is about time to change the tire 30 (step S7: Yes), the tire management apparatus 10 selects one or more tires from a plurality of tires that differ in wear characteristics based on the evaluation value (step S8), and outputs data of the selected tires (step S9). In the case where it is not yet time to change the tire 30 (step S7: No), the tire management apparatus 10 ends the series of processes without selecting any replacement tire.

As described above, the tire management apparatus 10 and the tire management method according to this embodiment can evaluate the state, including wear, of the tires 30 mounted on the vehicle 20 and appropriately manage the state of the tires 30.

Although an embodiment of the present disclosure has been described by way of the drawings and examples, various changes or modifications may be easily made by those of ordinary skill in the art based on the present disclosure. Such various changes or modifications are therefore included in the scope of the present disclosure. For example, the functions included in the components, steps, etc. may be rearranged without logical inconsistency, and a plurality of components, steps, etc. may be combined into one component, step, etc. and a component, step, etc. may be divided into a plurality of components, steps, etc. The embodiment of the present disclosure can also be implemented as a program executed by a processor included in an apparatus or a storage medium storing such a program, which are also included in the scope of the present disclosure.

The tire management apparatus 10 may have any structure. For example, the processing executed by the tire management apparatus 10 that is one computer in the foregoing embodiment may be executed by distributed processing by a plurality of computers. For example, the server 60 in the tire management system 1 may execute part of the processing of the tire management apparatus 10 (for example, the processing of the data acquisition section 131).

### REFERENCE SIGNS LIST

- 1: tire management system
- 10: tire management apparatus
- 11: communication section
- 12: storage
- 13: controller
- 20: vehicle
- 30: tire
- 40: network
- 50: terminal apparatus
- 60: server
- 131: data acquisition section
- 132: wear state calculator
- 133: evaluation value calculator
- 134: selector
- 135: output section

## Claims

1. A tire management apparatus configured to manage a tire mounted on a vehicle, the tire management apparatus comprising:
a data acquisition section configured to acquire data related to a running distance of the vehicle and a wear amount of the tire in a first period;
a wear state calculator configured to calculate a wear state value that is a wear rate of the tire or a runnable distance until an end of a wear life of the tire, based on the acquired data; and
an evaluation value calculator configured to calculate an evaluation value for the tire, based on comparison between the calculated wear state value and a reference value of the wear state value.

2. The tire management apparatus according to claim 1, wherein the evaluation value includes a value related to a cost of the tire.

3. The tire management apparatus according to claim 1 or 2, wherein the tire comprises a plurality of tires mounted on the vehicle, and the evaluation value is an average value of the plurality of tires.

4. The tire management apparatus according to any one of claims 1 to 3, wherein the evaluation value calculator is configured to set the reference value based on data related to the running distance of the vehicle and the wear amount of the tire in a period before the first period.

5. The tire management apparatus according to any one of claims 1 to 4, comprising
a selector configured to select one or more tires from a plurality of tires that differ in wear characteristics, based on the evaluation value.

6. The tire management apparatus according to any one of claims 1 to 5, wherein the data acquisition section is configured to acquire data related to the running distance of the vehicle and the wear amount of the tire in a second period after the first period, and
the evaluation value calculator is configured to update the reference value based on the data related to the running distance of the vehicle and the wear amount of the tire in the first period.

7. A tire management method executed by a tire management apparatus that manages a tire mounted on a vehicle, the tire management method comprising:
acquiring data related to a running distance of the vehicle and a wear amount of the tire in a first period;
calculating a wear state value that is a wear rate of the tire or a runnable distance until an end of a wear life of the tire, based on the acquired data; and
calculating an evaluation value for the tire, based on comparison between the calculated wear state value and a reference value of the wear state value.
